# EUROPEAN PATENT SPECIFICATION

(11) **EP 2 956 831 B1**
(45) Date of publication and mention of the grant of the patent: **14.08.2019**
(21) Application number: 13704445.9
(22) Date of filing: 15.02.2013
(51) Int. Cl.: G05B 23/02, F03D 17/00

(54) **CONDITION MONITORING SYSTEM AND METHOD FOR CREATING OR UPDATING SERVICE INFORMATION**
ZUSTANDSÜBERWACHUNGSSYSTEM UND VERFAHREN ZUR ERSTELLUNG ODER AKTUALISIERUNG VON DIENSTINFORMATIONEN
SYSTÈME DE SURVEILLANCE D'ÉTAT ET PROCÉDÉ DE CRÉATION ET D'ACTUALISATION D'INFORMATIONS DE SERVICE

(43) Date of publication of application: 23.12.2015
(73) Proprietor: Aktiebolaget SKF, 415 50 Göteborg (SE)
(72) Inventor: DU PLESSIS, Theo, NL-5235 BW Den Bosch (NL)
(74) Representative: Kuhstrebe, Jochen
(86) International application number: PCT/EP2013/053066
(87) International publication number: WO 2014/124683

(56) References cited:
- WO-A2-2011/058100
- US-A1- 2009 266 160
- US-A1- 2010 133 822
- US-A1- 2010 280 872
- US-A1- 2012 219 418

## Description

### TECHNICAL FIELD

The invention relates to a condition monitoring system including a network of distributed devices to be monitored, in particular a network of wind power plants, at least one portable communication device and at least one control server.

### BACKGROUND

Condition monitoring systems for wind turbines are widely used in the wind energy market, wherein one of the systems is known as the SKF WindCon system. There are also systems for scheduling operations and maintenance activities, and for monitoring these activities, one such system is described in US2010/0280872.

Modern wind turbine generators have grown to be more and more complex and are often located in places such as off-shore wind parks, which are difficult to access. In order to reduce downtime to a minimum and to improve performance and reliability, maintenance and service works have to be carried out in a reliable and efficient way such that small problems may be detected before they lead to major breakdowns.

On present and future off-shore installations, the cost of getting to the wind turbines may be considerable such that it is important to avoid missing essential steps once the maintenance worker has entered the nacelle.

Further, the increasing size of wind parks leads to an increasing risk of confusion. The human service worker may mix up a service schedule for one turbine with the service schedule for another turbine, store notes, images, sound files in the central data server under the wrong turbine identification number or even forget to store the data collected or images taken during the inspection entirely.

Actually, the service worker is provided with a schedule for his service or maintenance works when he leaves his office or workshop and may reach the turbine hours of even days later. As a consequence, his schedule might be outdated and incomplete. Since regular mobile telecommunication networks are usually not available e.g. in off-shore wind energy parks, calling or alerting the service worker via telephone may not be possible or, when using satellite communication, very expensive.

Meanwhile, most of the modern wind turbines are provided with monitoring units installed in the nacelle of the wind energy plant and provided with a fixed wire-bound communication link to a central control server storing data collected by various sensors mounted in critical points of the turbine for monitoring purposes. This fixed communication link may be e.g. a standard telecommunication cable or the like, which may be guided in a common channel with the power lines.

### SUMMARY

The invention seeks to avoid the above problems by making use of the communication link between the monitoring unit installed on-side and the central control server as detailed in the independent claims. Further features and favorable embodiments are defined in the dependent claims and in the specification.

The invention starts from a condition monitoring system including a network of distributed devices to be monitored, at least one portable communication device and at least one central control server. The devices to be monitored could be wind turbines, distributed devices on a large factory site or any other network of remote devices to be controlled centrally. The portable communication device could be a laptop computer, a cellular phone, a tablet computer or any other electronic device capable of exchanging electronic data with the network to be monitored.

The devices to be controlled are provided with at least one sensor for measuring condition data of the device. The sensors may include temperature sensors, vibration sensors, acceleration sensors, rotation sensors, pressure sensors, cameras or any other suitable sensors used for monitoring mechanical, electromechanical or electronic devices. Further, the devices to be monitored include a monitoring unit for receiving and processing the condition data from at least one sensor, wherein the communication link between the devices to be monitored and the central control server is established via the monitoring unit.

The monitoring unit is configured to send the processed condition data of the pertinent device to the central control server in combination with identification data for identifying the device such that the central control server may unambiguously identify the device from which the data originates and store it in connection with the device identification number in a suitable database.

According to one aspect of the invention, it is proposed that the monitoring unit is equipped with a communication interface for connecting a portable communication device to the monitoring unit. The communication interface may be a wireless or wire-bound communication interface as further detailed below. The inventor proposes that the monitoring unit should be configured to automatically provide updated condition data to the portable communication device upon establishment of the connection to the monitoring unit.

The automatic update ensures that the service information, which may include service schedules, checklists and the like, is up to date in the moment where the service personnel reaches the device do be checked or examined and errors due to outdated data can be safely avoided.

t is further proposed that access information for connecting the portable communication device to the monitoring unit is provided nearby the device to be checked or examined, in particular nearby or on the housing of the monitoring unit. This access information may include passwords, encryption keys and instructions for establishing the connection. This holds in particular where service information used and displayed on the portable communication device is created or updated based on the updated condition data.

The portable communication device may further be equipped with a scanning device for scanning a computer-readable code provided on the or next to the monitoring unit. The scanning device may be a camera, an infrared sensor or barcode scanner, an RFID-scanner or the like.

The computer-readable code should be provided on the device or in a distance of at most 5 m so as to be immediately visible for a service worker.

Further, it is proposed that the portable communication device comprises application software configured to generate access information for establishing encrypted data connection with the monitoring device based on the computer-readable code. The computer-readable code, e.g. a barcode or a QR-code, should preferably be computer-readable only, i.e. not readable by a human. As a consequence, the arrangement enables an automated connection while at the same time ensuring at least a two-fold security control including, firstly, the control of the physical access to the proximity of the device, e.g. the access to the nacelle of the wind turbine and the requirement that the dedicated application software capable of deciphering the computer-readable code and generating access data such as user name, password or/and encryption keys based on that code. The access information need not be distributed or made available outside the software. In the case of a wireless interface such as a Bluetooth interface or W-lan interface, access to the monitoring device by unregistered communication devices outside of the nacelle of the wind turbine may thus be safely avoided.

In the case of wind turbines to be monitored, the nacelle of the wind turbine will further act as a Faraday cage screening the signals from inside the nacelle.

As explained above, the security level can be further increased when the computer-readable code is provided in an access-restricted area in the device or near the device to be monitored. In one embodiment of the invention, the monitoring device may be equipped with a housing having a door which is openable with a key, wherein the computer-readable code may be arranged inside the door such that it is mandatory to have a (physical) key to access the code for generating the access information and to establish the connection.

The easy and basically fully automatic connection is particularly useful in the field of wind turbine monitoring because the service works include access by service workers of various professions, nationalities and different companies. In the case of a password-protected access, distributing the password to all the potential service workers involves complex logistics and is a security risk. Instead, distributing the software application is much easier to manage and the access rights granted in this way may be limited in scope or time in an easy way.

In a further embodiment of the invention, the monitoring unit is configured to enable data exchange between the central control server and the portable communication device by making use of the communication connection. This data exchange may be controlled by the monitoring system and be subject to a further access control, e.g. the requirement to provide a further password and/or user name allowing for direct access to the central control server.

Enabling data exchange may include downloading device information from the central control server, wherein the monitoring unit may be configured to add the identification data to the download request triggered by the portable communication device such that it is always ensured that the device information relating to the correct device is downloaded.

Further, the data exchange may include uploading data generated by the portable communication device to the central control server, wherein the monitoring unit may be configured to add the identification data to the uploaded data such that the data uploaded via the monitoring unit is surely stored in the data section pertaining to the correct device and nothing is mixed up.

Data to be uploaded may include photographs taking by parts of the device, in particular wear parts, sound files with voice news or noises of the device recorded by the portable communication device, movies, written notes or the like.

In the above, the communication interface is preferably a short range wireless interface, wherein the expression "short range" refers to a range of less than 40 m, preferably 20 to 30 m. In a simple embodiment of the invention, the communication interface may be a W-lan or Bluetooth interface. The application program stored in the portable communication device may automatically give guidance to scan or otherwise read the computer-readable code provided near the device once it receives signals of the communication interface.

Preferably, the communication between the portable communication device and the monitoring unit is encrypted such that the confidentiality of the data exchange is maintained.

In a further preferred embodiment of the invention, the condition monitoring system is equipped with a buffer memory in the monitoring unit for storing data to be submitted to the central control server temporarily while the communication link is down. This data being temporarily stored may include the regular monitoring data recorded by the sensors as well as the additional data submitted by the portable communication device via the communication interface according to the invention.

Finally, the invention proposes a portable communication device according to claim 12.

A further aspect of the invention relates to a method according to claim 13.

The above description of the invention as well as the appended claims, figures and the following description of preferred embodiments show multiple characterizing features of the invention in specific combinations. The skilled person will easily be able to consider further combinations or sub-combinations of these features in order to adapt the invention as defined in the claims to his or her specific needs.

### BRIEF DESCRIPTION OF THE DRAWINGS

The invention will now be described in more detail for explanatory, and in no sense limiting, purposes, with reference to the following figures, in which
- Fig. 1: is a schematic view of an off-shore wind turbine in a large area wind energy park and of a monitoring system for monitoring the turbines in this park.
- Fig. 2: s a schematic view of a monitoring unit installed inside the nacelle of the turbine of Fig. 1 and of a tablet computer as a portable communication device.

### DETAILED DESCRIPTION

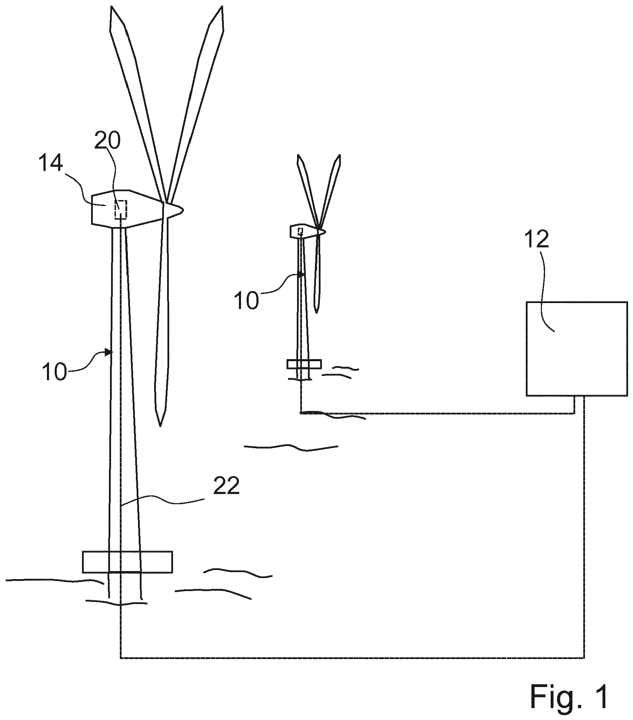

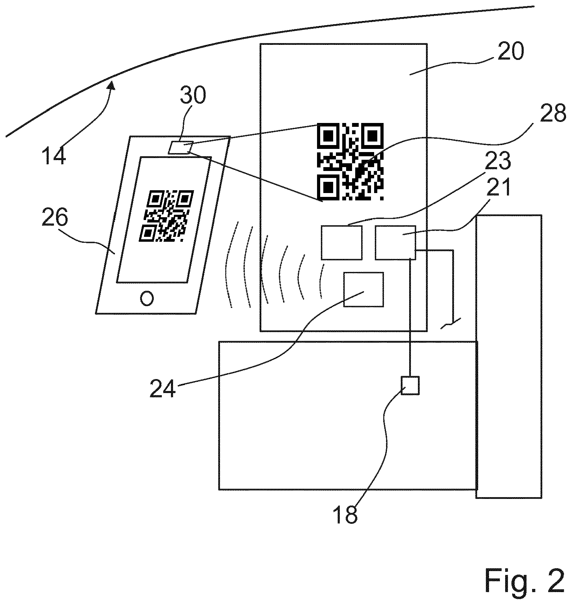

Figs. 1 and 2 illustrate a condition monitoring system and a method according to the invention. The condition monitoring system includes a network of distributed wind turbines 10 as a network of distributed devices to be monitored and a central control server 12 located in a control room of the network, which may be on the land, whereas the turbines 10 are installed off-shore in this example.

The turbines include a nacelle 14. The nacelle 14 is a housing receiving a generator, bearings and transmission gears (not shown) necessary for the operation of the turbine 10 and for generating electricity out of the wind power.

Multiple sensors such as a sensor 18 (Fig. 2) for measuring the temperature of the generator (not shown) as well as other temperature sensors, rotation sensors, vibration sensors and acceleration sensors are mounted at critical points of the turbine 10 inside and/or outside the nacelle 14 for monitoring purposes.

The sensors 18 are connected to a monitoring unit 20 mounted inside the nacelle 14, which records and processes the sensor signals received from the sensors 18.

The monitoring unit 20 includes a processor 21 capable of performing various signal processing algorithms such as time wave form analysis, vector analysis, real-time Fourier transforms, digital peak enveloping, integration/derivation both in time and frequency domain, Windowing, etc. as well as the possibility to implement user-formulated mathematical equations based on the obtained results. The results are compared with threshold parameters for triggering alarm signals. Cable fault and sensor fault detection systems are also implemented. The sensor input interfaces of the monitoring unit 20 include multiple analog inputs as well as digital inputs.

The monitoring unit 20 is provided with Ethernet interfaces connected to a communication wire forming a communication link 22 to the central server 12. The communication link uses TCP/IP.

Further, various other interfaces such as an RS 232 service interface for updating the firmware of the processor 21 of the monitoring unit 20 or for reading out data on a solid state memory device 23 of the monitoring unit etc. is also provided. The invention proposes to provide, preferably in addition to the above, a communication interface 24 for connecting a portable communication device 26 to the monitoring unit 20, wherein "connection" means data exchange connection in this context.

The service staff may enter the nacelle 14 of the turbine 10 in order to execute service and maintenance work on a regular basis. The standard procedure in the prior art is to provide the service workers with checklists, a service schedule or the like on paper, wherein the service worker notes his or her observations on the paper, takes photographs of critical components, wear parts or the like using a portable camera and the thus collected information has to be manually added to a database of the wind turbine system maintained in the server 12. The checklists or service schedules are prepared before the service worker leaves his office.

The invention proposes that the service workers should use, as a replacement for the paper documents or in addition to these, a portable communication device 26 such as a tablet computer, a smart phone or a notebook computer.

Fig. 2 illustrates the case where a tablet computer 26 is used as the portable communication device and wherein the communication interface 24 is a short-range Bluetooth interface. The expression short-range is to be interpreted in the context of the application so as to safely cover the typical distances of the service worker to the device to be monitored but preferably not overlapping with the range of wireless communication interfaces in neighboring devices to be monitored. For wind turbines 10, it is sufficient if the signals of the wireless communication interface 24 can be received inside the nacelle 14, at most at the access platform at the bottom of the turbine tower, such that the range should be of the order of the height of the tower.

The monitoring unit 20 is arranged in a wall-mounted box in the embodiment of Fig. 2 and a computer-readable code 28 in the form of a QR-tag is provided as a sticker on the door of a monitoring unit 20.

Once the service worker enters the range of the wireless communication interface 24 and the portable communication device 26 carried by him receives the signals of communication interface 24, a dedicated application software installed on the portable communication device 28 notifies the holder of the device 26 that wireless access to the monitoring unit 20 is available and gives instructions on how to create the connections. In the alternative, the communication interface 26 may start sending signals only upon manual activation by the service staff. These instructions may be provided in a language chosen in the user settings of the portable communication device 26 and include the information that the computer-readable code 28 is provided on the front door of the monitor unit 20 and that the user should scan the code 28 using a built-in camera 30 of the portable communication device 26 as a scanning device.

Once the computer-readable code 28 has been scanned, the application software in the portable communication device uses the code scanned by the camera 30 to generate a password or other kind of access information (encryption keys, user name or the like) for establishing an encrypted data connection with the monitoring device 20 in a fully automated way.

Optionally, the monitoring device 20 may establish a further new connection to the central control server 12 so as to upload and download data files. This direct connection to the central control server 12 may require the manual input of additional access information such as user name and/or password by the service worker.

The communication access to the monitoring unit 20 as described above is highly secure because the computer-readable code 28 is provided in the nacelle 14, which is an access-restricted area which is usually not accessible for unauthorized personnel. In addition, the application software on the portable communication device 26 is mandatory for the establishment of the connection and the computer-readable code 28 is not readable by humans.

Once the data connection to the central control server 12 is established, updated device information and/or condition data pertaining to the turbine 10 to be maintained or checked is downloaded from the central control server 12 to the portable communication device 26 and a service checklist or service schedule is automatically created or updated on the device 26. In addition to this, the user is free to specifically request the download of any data of interest in the case where these are not included in the automatic update. The device information and condition data may include long-time trend data, comparisons with other turbines nearby correlation data and other data helping the service worker understand the problems or potential problems of the device 10 being checked. The portable communication device 26 includes a microphone and the possibility to record voice notes or noise of the generator for documentation purposes as well as the camera 30, which can be used for taking images of parts of interest, e.g. wear parts, damaged parts or the like. Further, notes may be taken in the electronic checklist stored in the device 26 or elsewhere. The thus produced data files, i.e. image files, sound files or text files with notes may be uploaded to the central control server 12 automatically or upon request by the user.

In one embodiment of the invention, the user is prompted upon saving the file whether or not he wishes to upload the file to the central control server 12. If he agrees, the data files are transferred to the monitoring unit 20 via the communication interface 24 and the monitoring unit 20 creates a data packet with a header including the device identification number identifying the turbine 10 being checked, the time and the date and optionally identification information of the service worker such as his name and corporate affiliation.

Due to the automated upload via the monitoring unit 20 in combination with a device identification number, appropriate processing the central control server 12 is ensured and storing files such as images of one turbine 10 under the identification number of another turbine may be safely avoided. In this respect, the feature that the communication between the portable communication device 26 and the control server 12 takes place via the monitoring unit 20 and has major advantages.

The upload of data files may be done file by file or in a consolidated way as a packet upon completion of the service or maintenance works.

The possibility to download data from the central control server opens the possibility to obtain not only real-time data from the monitoring unit 20 but also long-time trends or comparisons with other turbines 10 nearby which are not available in the local monitoring units 20 of the respective devices.

## Claims

1. Condition monitoring system including a network of distributed devices (10) to be monitored, at least one portable communication device (26) and at least one central control server (12), wherein each of the devices (10) is provided with:
a. at least one sensor (18) for measuring condition data of the device (10),
b. a monitoring unit (20) for receiving and processing the condition data from the at least one sensor (18),
c. a communication link (22) between the monitoring unit (20) and the central control server (12),
wherein:
- the monitoring unit (20) is configured to send the processed condition data of the device to the central control server (10) in combination with identification data for identifying the device; and
- the central control server (12) is configured to store the condition data in combination said identification data,
- the monitoring unit (20) is equipped with a communication interface (24) for connecting the portable communication device (26) to the monitoring unit (20), wherein
- the monitoring unit (20) is configured to automatically provide updated condition data to the portable communication device (26) upon establishment of the connection to the monitoring unit (20) and wherein
- service information used and displayed on said portable communication device (26) is created or updated based on the updated condition data **characterized in that**
- the service information includes a service schedule or a checklist.

2. Condition monitoring system according to claim 1, wherein the network of distributed devices (10) includes at least one wind turbine having a nacelle (14), wherein the monitoring unit (20) is arranged in the nacelle (14) of the wind turbine.

3. Condition monitoring system according to claim 1 or 2, wherein access information (28) for connecting the portable communication device (26) to the monitoring unit (20) is provided inside the nacelle (14) of the wind turbine.

4. Condition monitoring system according one of the preceding claims, wherein the monitoring unit (20) is configured to enable bi-directional data exchange between the central control server (12) and the portable communication device (26) using the communication link (22).

5. Condition monitoring system according to one of the preceding claims, wherein said data exchange includes downloading device information form the central control server (12) upon request by the portable communication device (26), wherein the monitoring unit (20) is configured to add the identification data to a download request triggered by the portable communication device (26).

6. Condition monitoring system according to claim 5, wherein said data exchange includes uploading data generated by the portable communication device (26) to the central control server (12), wherein the monitoring unit (20) is configured to add the identification data to the uploaded data.

7. Condition monitoring system according to one of the preceding claims, wherein the monitoring unit (20) is configured to receive image data from a camera (30) built in the portable communication device (26) or sound data from a means for recording sound files from the portable communication device (26) and to send the image data and/or sound data in combination with identification data for identifying device to the central control server (12).

8. Condition monitoring system according to one of the preceding claims, wherein said communication interface (24) is a short-range wireless interface.

9. Condition monitoring system according to claim 8, wherein the communication interface (24) is a W-LAN or Bluetooth interface.

10. Condition monitoring system according to one of the preceding claims, wherein the communication between the portable communication device (26) and the monitoring unit (20) is encrypted.

11. Condition monitoring system according to one of the preceding claims, wherein monitoring unit (20) comprises a buffer memory (23) for storing data to be submitted to the central control server (12) temporarily while the communication link (22) is down.

12. Portable communication device (26) for use in a condition monitoring system according to one of the preceding claims, wherein the portable communication device (26) is provided with application software for establishing a communication connection to the monitoring unit (20) and/or the central control server (12) and for receiving updated condition data upon establishment of the connection to the monitoring unit (20) using the communication interface (24) of the monitoring unit (20) wherein service information used and displayed on said portable communication device (26) is created or updated based on the updated condition data, and **characterized in that** the service information includes a service schedule or checklist.

13. Method for servicing devices in a network of distributed devices of a condition monitoring system according to one of the preceding claims, the method including the steps of:
a. establishing a communication connection between the portable communication device (26) and the monitoring unit (20) and/or the central control server (12); and
b. providing the portable communication device (26) with updated condition data pertaining to the device to be monitored, and
c. creating or updating service information based on the updated condition data, **characterized in that** the service information includes a service schedule or checklist.

## Patentansprüche

1. Zustandsüberwachungssystem, enthaltend ein Netzwerk verteilter Vorrichtungen (10), das zu überwachen ist, mindestens eine tragbare Kommunikationsvorrichtung (26) und mindestens einen zentralen Steuerserver (12), wobei jede der Vorrichtungen (10) mit Folgendem versehen ist:
a. mindestens einem Sensor (18) zum Messen von Zustandsdaten der Vorrichtung (10),
b. einer Überwachungseinheit (20) zum Empfangen und Verarbeiten der Zustandsdaten von dem mindestens einen Sensor (18),
c. einer Kommunikationsverknüpfung (22) zwischen der Überwachungseinheit (20) und dem zentralen Steuerserver (12),
wobei
- die Überwachungseinheit (20) konfiguriert ist, die verarbeiteten Zustandsdaten der Vorrichtung an den zentralen Steuerserver (10) in Kombination mit Identifikationsdaten zum Identifizieren der Vorrichtung zu senden; und
- der zentrale Steuerserver (12) konfiguriert ist, die Zustandsdaten in Kombination mit den Identifikationsdaten zu speichern,
- die Überwachungseinheit (20) mit einer Kommunikationsschnittstelle (24) zum Verbinden der tragbaren Kommunikationsvorrichtung (26) mit der Überwachungseinheit (20) ausgerüstet ist, wobei
- die Überwachungseinheit (20) konfiguriert ist, der tragbaren Kommunikationsvorrichtung (26) nach Herstellung der Verbindung mit der Überwachungseinheit (20) aktualisierte Zustandsdaten automatisch bereitzustellen, und wobei
- Wartungsinformationen, die an der tragbaren Kommunikationsvorrichtung (26) verwendet und angezeigt werden, basierend auf den aktualisierten Zustandsdaten erzeugt oder aktualisiert werden, **dadurch gekennzeichnet, dass**
- die Wartungsinformationen einen Wartungsplan oder eine Prüfliste umfassen.

2. Zustandsüberwachungssystem nach Anspruch 1, wobei das Netzwerk verteilter Vorrichtungen (10) mindestens eine Windturbine mit einem Maschinenhaus (14) enthält, wobei die Überwachungseinheit (20) in dem Maschinenhaus (14) der Windturbine angeordnet ist.

3. Zustandsüberwachungssystem nach Anspruch 1 oder 2, wobei Zugangsinformationen (28) zum Verbinden der tragbaren Kommunikationsvorrichtung (26) mit der Überwachungseinheit (20) im Inneren des Maschinenhauses (14) der Windturbine bereitgestellt sind.

4. Zustandsüberwachungssystem nach einem der vorstehenden Ansprüche, wobei die Überwachungseinheit (20) konfiguriert ist, bidirektionalen Datenaustausch zwischen dem zentralen Steuerserver (12) und der tragbaren Kommunikationsvorrichtung (26) unter Verwendung der Kommunikationsverknüpfung (22) zu ermöglichen.

5. Zustandsüberwachungssystem nach einem der vorstehenden Ansprüche, wobei der Datenaustausch Herunterladen von Vorrichtungsinformationen von dem zentralen Steuerserver (12) nach Anforderung durch die tragbare Kommunikationsvorrichtung (26) enthält, wobei die Überwachungseinheit (20) konfiguriert ist, die Identifikationsdaten einer durch die tragbare Kommunikationsvorrichtung (26) ausgelösten Anforderung zum Herunterladen hinzuzufügen.

6. Zustandsüberwachungssystem nach Anspruch 5, wobei der Datenaustausch Hochladen von durch die tragbare Kommunikationsvorrichtung (26) erzeugten Daten zu dem zentralen Steuerserver (12) enthält, wobei die Überwachungseinheit (20) konfiguriert ist, die Identifikationsdaten den hochgeladenen Daten hinzuzufügen.

7. Zustandsüberwachungssystem nach einem der vorstehenden Ansprüche, wobei die Überwachungseinheit (20) konfiguriert ist, Bilddaten von einer in der tragbaren Kommunikationsvorrichtung (26) eingebauten Kamera (30) oder Tondaten von einem Mittel zum Aufnehmen von Tondateien von der tragbaren Kommunikationsvorrichtung (26) zu empfangen und die Bilddaten und/oder Tondaten in Kombination mit Identifikationsdaten zum Identifizieren der Vorrichtung an den zentralen Steuerserver (12) zu senden.

8. Zustandsüberwachungssystem nach einem der vorstehenden Ansprüche, wobei die Kommunikationsschnittstelle (24) eine drahtlose Kurzbereichsschnittstelle ist.

9. Zustandsüberwachungssystem nach Anspruch 8, wobei die Kommunikationsschnittstelle (24) eine WLAN- oder Bluetooth-Schnittstelle ist.

10. Zustandsüberwachungssystem nach einem der vorstehenden Ansprüche, wobei die Kommunikation zwischen der tragbaren Kommunikationsvorrichtung (26) und der Überwachungseinheit (20) verschlüsselt ist.

11. Zustandsüberwachungssystem nach einem der vorstehenden Ansprüche, wobei die Überwachungseinheit (20) einen Pufferspeicher (23) zum vorübergehenden Speichern von Daten, die an den zentralen Steuerserver (12) zu übermitteln sind, während die Kommunikationsverknüpfung (22) außer Betrieb ist, enthält.

12. Tragbare Kommunikationsvorrichtung (26) zur Verwendung in einem Zustandsüberwachungssystem nach einem der vorstehenden Ansprüche, wobei die tragbare Kommunikationsvorrichtung (26) mit Anwendungssoftware zum Herstellen einer Kommunikationsverbindung mit der Überwachungseinheit (20) und/oder dem zentralen Steuerserver (12) und zum Empfangen von aktualisierten Zustandsdaten nach Herstellung der Verbindung mit der Überwachungseinheit (20) unter Verwendung der Kommunikationsschnittstelle (24) der Überwachungseinheit (20) versehen ist, wobei Wartungsinformationen, die an der tragbaren Kommunikationsvorrichtung (26) verwendet und angezeigt werden, basierend auf den aktualisierten Zustandsdaten erzeugt oder aktualisiert werden, und **dadurch gekennzeichnet, dass** die Wartungsinformationen einen Wartungsplan oder eine Prüfliste enthalten.

13. Verfahren zum Warten von Vorrichtungen in einem Netzwerk verteilter Vorrichtungen eines Zustandsüberwachungssystems nach einem der vorstehenden Ansprüche, das Verfahren die folgenden Schritte enthaltend:
a. Herstellen einer Kommunikationsverbindung zwischen der tragbaren Kommunikationsvorrichtung (26) und der Überwachungseinheit (20) und/oder dem zentralen Steuerserver (12); und
b. Versehen der tragbaren Kommunikationsvorrichtung (26) mit aktualisierten Zustandsdaten betreffend die zu überwachende Vorrichtung und
c. Erzeugen oder Aktualisieren von Wartungsinformationen basierend auf den aktualisierten Zustandsdaten, **dadurch gekennzeichnet, dass** die Wartungsinformationen einen Wartungsplan oder eine Prüfliste enthalten.

## Revendications

1. Système de surveillance d'état comportant un réseau de dispositifs distribués (10) à surveiller, au moins un dispositif de communication portable (26) et au moins un serveur de commande central (12), dans lequel chacun des dispositifs (10) est doté :
a. d'au moins un capteur (18) pour mesurer des données d'état du dispositif (10),
b. d'une unité de surveillance (20) pour recevoir et traiter les données d'état provenant de l'au moins un capteur (18),
c. d'une liaison de communication (22) entre l'unité de surveillance (20) et le serveur de commande central (12),
dans lequel :
- l'unité de surveillance (20) est configurée pour envoyer les données d'état traitées du dispositif au serveur de commande central (10) en combinaison avec des données d'identification pour identifier le dispositif ; et
- le serveur de commande central (12) est configuré pour mémoriser les données d'état en combinaison avec lesdites données d'identification,
- l'unité de surveillance (20) est dotée d'une interface de communication (24) pour connecter le dispositif de communication portable (26) à l'unité de surveillance (20), dans lequel
- l'unité de surveillance (20) est configurée pour fournir automatiquement des données d'état actualisées au dispositif de communication portable (26) à l'établissement de la connexion avec l'unité de surveillance (20) et dans lequel
- des informations d'entretien utilisées et affichées sur ledit dispositif de communication portable (26) sont créées ou actualisées en fonction des données d'état actualisées **caractérisé en ce que**
- les informations d'entretien comportent un programme d'entretien ou une liste de vérification.

2. Système de surveillance d'état selon la revendication 1, dans lequel le réseau de dispositifs distribués (10) comporte au moins une éolienne présentant une nacelle (14), dans lequel l'unité de surveillance (20) est agencée dans la nacelle (14) de l'éolienne.

3. Système de surveillance d'état selon la revendication 1 ou 2, dans lequel des informations d'accès (28) pour connecter le dispositif de communication portable (26) à l'unité de surveillance (20) sont fournies à l'intérieur de la nacelle (14) de l'éolienne.

4. Système de surveillance selon l'une des revendications précédentes, dans lequel l'unité de surveillance (20) est configurée pour permettre un échange de données bidirectionnel entre le serveur de commande central (12) et le dispositif de communication portable (26) au moyen de la liaison de communication (22) .

5. Système de surveillance d'état selon l'une des revendications précédentes, dans lequel ledit échange de données comporte le téléchargement d'informations de dispositif à partir du serveur de commande central (12) à la demande du dispositif de communication portable (26), dans lequel l'unité de surveillance (20) est configurée pour ajouter les données d'identification à une demande de téléchargement déclenchée par le dispositif de communication portable (26).

6. Système de surveillance d'état selon la revendication 5, dans lequel ledit échange de données comporte le téléchargement en amont de données générées par le dispositif de communication portable (26) à destination du serveur de commande central (12), dans lequel l'unité de surveillance (20) est configurée pour ajouter les données d'identification aux données téléchargées en amont.

7. Système de surveillance d'état selon l'une des revendications précédentes, dans lequel l'unité de surveillance (20) est configurée pour recevoir des données d'image depuis une caméra (30) intégrée au dispositif de communication portable (26) ou des données de son provenant d'un moyen d'enregistrement de fichiers sonores depuis le dispositif de communication portable (26) et envoyer au serveur de commande central (12) les données d'image et/ou les données de son en combinaison avec des données d'identification pour identifier le dispositif.

8. Système de surveillance d'état selon l'une des revendications précédentes, dans lequel ladite interface de communication (24) est une interface sans fil de courte portée.

9. Système de surveillance d'état selon la revendication 8, dans lequel l'interface de communication (42) est une interface W-LAN ou Bluetooth.

10. Système de surveillance d'état selon l'une des revendications précédentes, dans lequel la communication entre le dispositif de communication portable (26) et l'unité de surveillance (20) est cryptée.

11. Système de surveillance d'état selon l'une des revendications précédentes, dans lequel l'unité de surveillance (20) comprend une mémoire tampon (23) destinée à mémoriser des données à soumettre au serveur de commande central (12) temporairement pendant que la liaison de communication (22) est interrompue.

12. Dispositif de communication portable (26) destiné à être utilisé dans un système de surveillance d'état selon l'une des revendications précédentes, le dispositif de communication portable (26) étant doté d'un logiciel d'application pour appliquer une connexion de communication avec l'unité de surveillance (20) et/ou le serveur de commande central (12) et recevoir des données d'état actualisées à l'établissement de la connexion avec l'unité de surveillance (20) à l'aide de l'interface de communication (24) de l'unité de surveillance (20), des informations d'entretien utilisées et affichées sur ledit dispositif de communication portable (26) étant créées ou actualisées en fonction des données d'état actualisées, et **caractérisé en ce que** les informations d'entretien comportent un programme d'entretien ou une liste de vérification.

13. Procédé d'entretien de dispositifs dans un réseau de dispositifs distribués d'un système de surveillance selon l'une des revendications précédentes, le procédé comportant les étapes suivantes :
a. établissement d'une connexion de communication entre le dispositif de communication portable (26) et l'unité de surveillance (20) et/ou le serveur de commande central (12) ; et
b. fourniture au dispositif de communication portable (26) de données d'état actualisées concernant le dispositif à surveiller, et
c. création ou actualisation d'informations d'entretien basées sur les données d'état actualisées, **caractérisé en ce que** les informations d'entretien comportent un programme d'entretien ou une liste de vérification.
